# EUROPÄISCHE PATENTANMELDUNG

(11) **EP 1 196 004 A2**
(43) Veröffentlichungstag der Anmeldung: **10.04.2002**
(21) Anmeldenummer: 01107027.3
(22) Anmeldetag: 21.03.2001
(51) Int. Cl.: H04Q 11/04

(54) **Verfahren zur Auswahl des günstigsten Anbieters**

(30) Priorität: 04.10.2000 DE 10060990
(71) Anmelder: Kaucher, Matthias, 79379 Müllheim (DE)
(72) Erfinder: Kaucher, Matthias, 79379 Müllheim (DE)
(74) Vertreter: Dreiss, Fuhlendorf, Steimle & Becker

(57) **Zusammenfassung**

Es wird ein Verfahren zum Betreiben eines Kommunikationssystems beschrieben. Es ist eine ISDN-Teilnehmerstelle (10) vorhanden, die zumindest zwei miteinander verbindbare Kanäle (B-Kanäle) aufweist. Die ISDN-Teilnehmerstelle (10) wird von einer Mobilstation (12) eines funkbasierten Kommunikationsnetzes auf dem ersten Kanal (B-Kanal) angerufen. Von der ISDN-Teilnehmerstelle (10) wird dann auf dem zweiten Kanal (B-Kanal) eine Verbindung zu einem Zielteilnehmer (15) aufgebaut. Der Anruf der Mobilstation (12) wird dann von der ISDN-Teilnehmerstelle (10) mit dem Zielteilnehmer (15) verbunden. Zweckmäßigerweise wird der Aufbau der Verbindung zu dem Zielteilnehmer (15) mit dem Ziel von möglichst geringen Verbindungskosten durchgeführt.

## Beschreibung

Die Erfindung geht aus von einem Verfahren zum Betreiben eines Kommunikationssystems mit einer ISDN-Teilnehmerstelle, die zumindest zwei miteinander verbindbare Kanäle aufweist. Weiterhin betrifft die Erfindung eine entsprechende ISDN-Teilnehmerstelle sowie einen Personalcomputer zur Kopplung mit einer derartigen ISDN-Teilnehmerstelle.

ISDN-Teilnehmerstellen sind allgemein bekannt. Derartige ISDN-Teilnehmerstellen weisen üblicherweise zwei B-Kanäle auf, die unter anderem zum Zwecke einer Konferenzschaltung miteinander verbunden werden können. Weiterhin ist es bekannt, für eine erwünschte Telefonverbindung zu einem Zielteilnehmer denjenigen Anbieter aus einer Mehrzahl von Anbietern zu ermitteln, der den günstigsten Tarif für diese Telefonverbindung bietet und mit dem damit die günstigsten Verbindungskosten erzielt werden können.

Aufgabe der vorliegenden Erfindung ist es, die vorgenannte Möglichkeit zur Auswahl eines günstigsten Anbieters zu erweitern.

Diese Aufgabe wird durch das Verfahren nach dem Anspruch 1 gelöst. Ebenfalls wird die Aufgabe durch die ISDN-Teilnehmerstelle nach dem Anspruch 12 sowie durch den Personalcomputer für eine ISDN-Teilnehmerstelle nach dem Anspruch 14 gelöst.

Die Erfindung eröffnet erstmals die Möglichkeit, auch bei einem Anruf, der von einer Mobilstation geführt wird, die ihrerseits in ein funkbasiertes Kommunikationsnetz eingebunden ist, die bekannten Möglichkeiten der Auswahl eines günstigsten Anbieters zu nutzen. Während somit bisher diese Möglichkeit der Auswahl eines günstigsten Anbieters letztlich nur im Rahmen von Festnetzen gegeben war, erweitert die Erfindung diese Möglichkeit auch auf funkbasierte Kommunikationsnetze. Damit ist es möglich, Anrufe von Mobilstationen derartiger funkbasierter Kommunikationsnetze noch kostengünstiger zu gestalten, indem auch bei derartigen Anrufen der jeweils günstigste Anbieter ausgewählt werden kann.

Die Erfindung nutzt zu diesem Zweck die Eigenschaften der ISDN-Teilnehmerstelle aus. Die ISDN-Teilnehmerstelle wird letztlich erfindungsgemäß als Vermittlungsstelle und gleichzeitig als Auswahlstelle für den günstigsten Anbieter herangezogen. So wird von der Mobilstation des funkbasierten Kommunikationsnetzes der Zielteilnehmer nicht direkt angerufen, sondern es wird von der Mobilstation die ISDN-Teilnehmerstelle angerufen. Dieser Anruf kann dabei vorzugsweise über eine verbilligte Wunschrufnummer oder über einen verbilligten Wunschvorwahlbereich durchgeführt werden.

Danach wird von der Mobilstation die Telefonnummer des Zielteilnehmers an die ISDN-Teilnehmerstelle weitergegeben. Die ISDN-Teilnehmerstelle ermittelt dann den günstigsten Anbieter für die Verbindung zu dem gewünschten Zielteilnehmer. Weiterhin baut die ISDN-Teilnehmerstelle daraufhin die Verbindung zu dem Zielteilnehmer über den ausgewählten günstigsten Anbieter auf. Sobald diese Verbindung aufgebaut ist, verbindet die ISDN-Teilnehmerstelle den Anruf von der Mobilstation mit der Verbindung zu dem Zielteilnehmer. Insgesamt existiert damit eine Telefonverbindung von der Mobilstation zu dem Zielteilnehmer über die ISDN-Teilnehmerstelle.

Bei einer vorteilhaften Weiterbildung der Erfindung ist es möglich, die Verbindung von der ISDN-Teilnehmerstelle zu dem Zielteilnehmer nicht über das Festnetz vorzunehmen, sondern über ein paketgebundenes Kommunikationsnetz, bspw. über das Internet. Weiterhin ist es möglich, mit Hilfe der Erfindung nicht nur eine kostengünstige Verbindung von der Mobilstation zu dem Zielteilnehmer in Form von Sprache aufzubauen, sondern auch eine entsprechende Telefaxverbindung oder sonstige Datenverbindung.

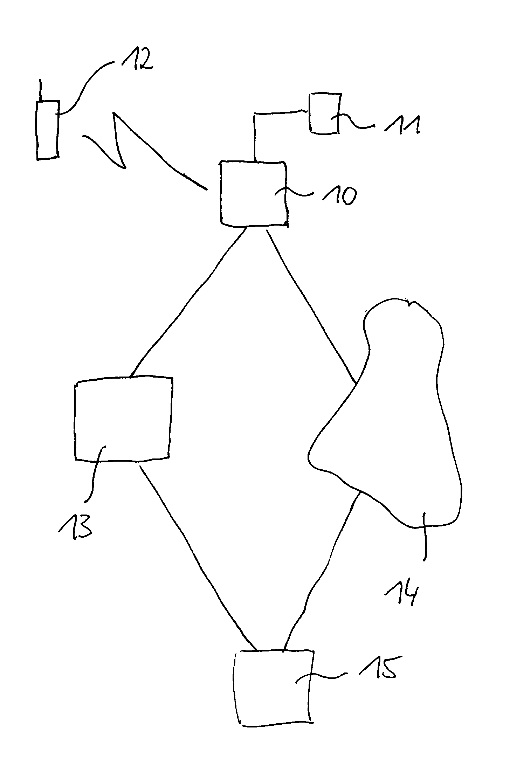

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild zum Zwecke der Erläuterung eines Ausführungsbeispiels des erfindungsgemäßen Verfahrens zum Betreiben eines Kommunikationssystems.

In der Figur ist eine ISDN-Teilnehmerstelle (ISDN = Integrated Services Digital Network, Dienstintegrierendes Digitalnetz) 10 dargestellt, die mit einem Personalcomputer 11 gekoppelt ist. Die ISDN-Teilnehmerstelle 10 weist zwei sog. B-Kanäle und einen sog. D-Kanal auf. Die beiden B-Kanäle können innerhalb der ISDN-Teilnehmerstelle 10 miteinander verbunden werden. Die Verbindung der beiden B-Kanäle kann dabei von dem Personalcomputer 11 durchgeführt werden.

Weiterhin ist in der Figur eine Mobilstation 12 dargestellt, die zu einem funkbasierten Kommunikationsnetz gehört. Bei diesem Kommunikationsnetz kann es sich bspw. um ein GSM-Netz (Global System for Mobile Communications, Global-Mobil-Kommunikationssystem) handeln. Entsprechend der Figur ist die Mobilstation 12 über Funk mit der ISDN-Teilnehmerstelle 10 verbunden, und zwar mit einem der beiden dort vorhandenen B-Kanäle.

Der andere B-Kanal der ISDN-Teilnehmerstelle 10 kann einerseits mit einem Festnetz 13 sowie andererseits mit einem paketgebundenen Kommunkationsnetz 14, bspw. mit dem Internet, verbunden werden. In beiden Fällen ist es damit möglich, die ISDN-Teilnehmerstelle 10 über das Festnetz 13 oder über das paketgebundene Kommunikationsnetz 14 mit einem Zielteilnehmer 15 zu verbinden.

Bei den meisten Anbietern von Mobilstationen für ein funkbasiertes Kommunikationsnetz gibt es eine sog. Wunschrufnummer oder zumindest einen sog. Wunschvorwahlbereich. Bei der Mobilstation 12 kann damit die Telefonnummer der ISDN-Teilnehmerstelle 10 als Wunschrufnummer oder als Wunschvorwahlbereich einprogrammiert werden. Damit ist es möglich, mit einem verbilligtem Tarif von der Mobilstation 12 einen Anruf bei der ISDN-Teilnehmerstelle 10 durchzuführen.

Auf dem Personalcomputer 11 ist ein Computerprogramm abgespeichert, das dazu geeignet ist, einen Anruf, der von der Mobilstation 12 bei der ISDN-Teilnehmerstelle 10 eingegangen ist, mit dem Ziel von möglichst geringen Verbindungskosten an den Zielteilnehmer 15 weiterzuleiten. Das Computerprogramm des Personalcomputers 11 ist dabei derart ausgestaltet, dass es sämtliche Steuerungsfunktionen ausführt, die erforderlich sind, um die ISDN-Teilnehmerstelle 10 auf die gewünschte Art und Weise zu betreiben.

Wenn ein Anruf von der Mobilstation 12 bei der ISDN-Teilnehmerstelle 10 eingeht, so wird von dem Personalcomputer 11 zuerst geprüft, ob die anrufende Mobilstation 12 dazu berechtigt ist, die Vorteile des auf dem Personalcomputer 11 abgespeicherten Computerprogramms in Anspruch zu nehmen. Diese Prüfung kann auf der Grundlage der Telefonnummer der Mobilstation 12 vorgenommen werden, die üblicherweise bei einem Anruf an die ISDN-Teilnehmerstelle 10 übertragen wird. Ebenfalls ist es möglich, die vorgenannte Überprüfung mit einer sog. PIN (PIN = Personal Identification Number) durchzuführen.

Sofern die anrufende Mobilstation 12 von dem Personalcomputer 11 als berechtigt anerkannt wird, wird in einem weiteren Schritt von der Mobilstation 12 diejenige Telefonnummer abgefragt, die von der Mobilstation 12 an sich erreicht werden soll. Dabei handelt es sich letztlich um die Telefonnummer des Zielteilnehmers 15. Diese Abfrage kann von dem Personalcomputer 11 über die ISDN-Teilnehmerstelle 10 bspw. in Form von Sprachausgaben an die Mobilstation 12 erfolgen.

Daraufhin gibt der Benutzer der Mobilstation 12 die Telefonnummer des Zielteilnehmers 15 auf der Tastatur seiner Mobilstation 12 ein. Diese Übermittlung der Telefonnummer des Zielteilnehmers 12 kann auch auf andere Art und Weise erfolgen, bspw. mit Hilfe des sog. DTMF-Verfahrens (DTMF = Dial Tone Multi Frequency, Wählton-Mehrfrequenzverfahren).

Die von dem Benutzer der Mobilstation eingegebene Telefonnummer 12 des Zielteilnehmers 15 wird daraufhin an die ISDN-Teilnehmerstelle 10 übertragen. Der Personalcomputer 11 überprüft und bearbeitet daraufhin diese Telefonnummer. Dies erfolgt - wie gesagt - mit dem Ziel, eine Verbindung zu dem Zielteilnehemr 15 aufzubauen, die möglichst geringe Verbindungskosten zur Folge hat.

Zu diesem Zweck überprüft der Personalcomputer 11 bspw. die Vorwahl des Zielteilnehmers 15. Unter anderem in Abhängigkeit von dieser Vorwahl wählt der Personalcomputer 11 mit Hilfe einer Datenbank aus einer Mehrzahl von möglichen Anbietern bzw. Providern denjenigen Anbieter aus, der zu diesem Vorwahlbereich die günstigsten Tarife anbietet. Als weitere Kriterien für die Auswahl dieses günstigsten Anbieters können von dem Personalcomputer 11 auch noch der Wochentag und/oder das aktuelle Datum und/oder die aktuelle Tageszeit und/oder der Ort der ISDN-Teilnehmerstelle 10 herangezogen werden. In Abhängigkeit von diesen Kriterien wählt - wie gesagt - der Personalcomputer 11 denjenigen Anbieter aus, der für die aktuell erforderliche Verbindung zu dem Zielteilnehmer 15 den günstigsten Tarif anbietet.

In Abhängigkeit davon überarbeitet der Personalcomputer 11 die von der Mobilstation 12 erhaltene Telefonnummer des Zielteilnehmers 15. Insbesondere integriert der Personalcomputer 11 die sog. Vor-Vorwahl des ausgewählten Anbieters in die Telefonnummer des Zielteilnehmers 15.

Danach baut der Personalcomputer 11 eine Telefonverbindung über das Festnetz 13 von der ISDN-Teilnehmerstelle 10 zu dem Zielteilnehmer 15 auf. Diese Telefonverbindung basiert dabei auf der erarbeiteten, neuen Telefonnummer und damit auf dem ausgewählten Anbieter mit dem günstigsten Tarif.

Sobald die Telefonverbindung von der ISDN-Teilnehmerstelle 10 über das Festnetz 13 zu dem Zielteilnehmer 15 aufgebaut ist, werden die beiden B-Kanäle innerhalb der ISDN-Teilnehmerstelle 10 von dem Personalcomputer 11 miteinander verbunden. Damit ist nunmehr eine Verbindung von der Mobilstation 12 zu dem Zielteilnehmer 15 hergestellt. Für diese Verbindung gelten dabei einerseits der erläuterte verbilligte Tarif für die Wunschrufnummer oder zumindest für den Wunschvorwahlbereich sowie andererseits der Tarif des günstigsten Anbieters für die Weiterleitung über das Festnetz 13.

Ergänzend kann der Personalcomputer 11 dazu geeignet sein, den Anruf von der Mobilstation 12 bei der ISDN-Teilnehmerstelle 10 an Stelle über das Festnetz 13 auch über das paketgebundene Kommunikationsnetz 14 an den Zielteilnehmer 15 weiterzuleiten. Handelt es sich dabei um ein übliches Telefongespräch, so ist es erforderlich, dass die zu übertragende Sprache in entsprechende paketgebundene Daten umgewandelt wird. Wird bspw. als paketgebundenes Kommunikationsnetz 14 das Internet verwendet, so muss die Sprache in das sog. Internet-Protokoll (IP) umgewandelt werden.

Wird diese Umwandlung der Sprache in paketgebundene Daten innerhalb der ISDN-Teilnehmerstelle 10 durchgeführt, so ist es möglich, über den zweiten B-Kanal einen oder mehrere Zielteilnehmer anzurufen. Damit entsteht insgesamt eine Konferenzschaltung über das Internet, an der die Mobilstation 12 und zwei oder mehr Zielteilnehmer beteiligt sind.

Als weitere Ergänzung ist es möglich, dass es sich bei der Mobilstation 12 um ein Telefaxgerät oder um ein sonstiges Datengerät handelt. Auch in diesem Fall kann die Weiterschaltung des Anrufs 12 bei der ISDN-Teilnehmerstelle 10 auf die beschriebene Art und Weise ausgenutzt werden. Da in diesem Fall bereits Daten vorliegen, die in einfacher Form an ein paketgebundenes Kommunikationsnetz weitergegeben werden können, ist es in diesem Fall besonders zweckmäßig, die Verbindung zu dem Zielteilnehmer über das paketgebundene Kommunikationsnetz 14 und nicht über das Festnetz 13 aufzubauen.

Zur Durchführung des vorbeschriebenen Verfahrens ist der Personalcomputer - wie gesagt - mit einem entsprechenden Computerprogramm ausgerüstet. Dieses Computerprogramm kann insbesondere auf einer Diskette oder auf einer CD-ROM abgespeichert sein. Es versteht sich, dass auch bereits derartige elektronische Speichermedien die Erfindung realisieren, auf denen ein entsprechendes Computerprogramm zur Durchführung des vorbeschriebenen Verfahrens abgespeichert sind. Weiterhin versteht es sich, dass der Personalcomputer 11 und die ISDN-Teilnehmerstelle 10 auch zusammengefasst sein können. Dies kann bedeuten, dass der Personalcomputer 11 als solcher nicht mehr vorhanden ist, sondern dass entsprechende Mittel, insbesondere entsprechende Prozessormittel innerhalb der ISDN-Teilnehmerstelle 10 vorhanden sind, die dann sämtliche Funktionen des Personalcomputers 11 übernehmen und ausführen.

## Patentansprüche

1. Verfahren zum Betreiben eines Kommunikationssystems mit einer ISDN-Teilnehmerstelle (10), die zumindest zwei miteinander verbindbare Kanäle (B-Kanäle) aufweist, **dadurch gekennzeichnet, daß** die ISDN-Teilnehmerstelle (10) von einer Mobilstation (12) eines funkbasierten Kommunikationsnetzes auf dem ersten Kanal (B-Kanal) angerufen wird, daß von der ISDN-Teilnehmerstelle (10) auf dem zweiten Kanal (B-Kanal) eine Verbindung zu einem Zielteilnehmer (15) aufgebaut wird, und daß der Anruf der Mobilstation(12) von der ISDN-Teilnehmerstelle (10) mit dem Zielteilnehmer (15) verbunden wird.

2. Verfahren nach Anspruch 1, **dadurch gekennzeichnet, daß** der Aufbau der Verbindung zu dem Zielteilnehmer (15) mit dem Ziel von möglichst geringen Verbindungskosten durchgeführt wird.

3. Verfahren nach Anspruch 2, **dadurch gekennzeichnet, daß** der Aufbau der Verbindung zu dem Zielteilnehmer (15) in Abhängigkeit vom aktuellen Zeitpunkt, vom Ort der ISDN-Teilnehmerstelle (10) und/oder vom Ort des Zielteilnehmers (15) durchgeführt wird.

4. Verfahren nach einem der Ansprüche 2 oder 3, **dadurch gekennzeichnet, daß** aus einer Datenbank ein sogenannter Provider bzw. Anbieter ermittelt wird, über den die Verbindung zu dem Zielteilnehmer (15) aufgebaut wird.

5. Verfahren nach einem der Ansprüche 1 bis 4, **dadurch gekennzeichnet, daß** der Anruf von der Mobilstation (12) zu der ISDN-Teilnehmerstelle (10) mit einem verbilligten Tarif durchgeführt wird.

6. Verfahren nach einem der Ansprüche 1 bis 5, **dadurch gekennzeichnet, daß** der Anruf von der Mobilstation (12) zu der ISDN-Teilnehmerstelle (10) auf seine Berechtigung überprüft wird.

7. Verfahren nach einem der Ansprüche 1 bis 6, **dadurch gekennzeichnet, daß** die Verbindung zu dem Zielteilnehmer (15) über ein Festnetz (13) aufgebaut wird.

8. Verfahren nach einem der Ansprüche 1 bis 7, **dadurch gekennzeichnet, daß** die Verbindung zu dem Zielteilnehmer (15) zumindest teilweise über ein paketgebundenes Kommunikationsnetz (14) aufgebaut wird.

9. Verfahren nach einem der Ansprüche 1 bis 8, **dadurch gekennzeichnet, daß** zwischen der Mobilstation (12) und dem Zielteilnehmer (15) Sprache und/oder Telefaxe und/oder sonstige Daten ausgetauscht werden.

10. Elektronisches Speichermedium, insbesondere Diskette oder CD-ROM oder dergleichen, auf dem ein Computerprogramm gespeichert ist, das auf einem Personalcomputer (11) ablauffähig ist, und das dazu geeignet ist, das Verfahren nach einem der Ansprüche 1 bis 9 auszuführen, wenn es auf dem Personalcomputer (11) abläuft.

11. Computerprogramm, das auf einem Personalcomputer (11) ablauffähig ist, und das dazu geeignet ist, das Verfahren nach einem der Ansprüche 1 bis 9 auszuführen, wenn es auf dem Personalcomputer (11) abläuft.

12. ISDN-Teilnehmerstelle (10), die zumindest zwei miteinander verbindbare Kanäle (B-Kanäle) aufweist, **dadurch gekennzeichnet, daß** die ISDN-Teilnehmerstelle (10) von einer Mobilstation (12) eines funkbasierten Kommunikationsnetzes auf dem ersten Kanal (B-Kanal)
angerufen werden kann, daß Mittel vorgesehen sind zum Aufbau einer Verbindung auf dem zweiten Kanal (B-Kanal) von der ISDN-Teilnehmerstelle (10) zu einem Zielteilnehmer (15), und daß Mittel vorgesehen sind zur Verbindung des Anrufs der Mobilstation (12) mit dem Zielteilnehmer (15).

13. ISDN-Teilnehmerstelle (10) nach Anspruch 12, **dadurch gekennzeichnet, daß** die Mittel einen Personalcomputer (11) aufweisen, der mit der ISDN-Teilnehmerstelle (10) gekoppelt ist.

14. Personalcomputer (11) zur Kopplung mit einer ISDN-Teilnehmerstelle (10), wobei die ISDN-Teilnehmerstelle (10) zumindest zwei miteinander verbindbare Kanäle (B-Kanäle) aufweist, **dadurch gekennzeichnet, daß** die ISDN-Teilnehmerstelle (10) von einer Mobilstation (12) eines funkbasierten Kommunikationsnetzes auf dem ersten Kanal (B-Kanal) angerufen werden kann, daß der Personalcomputer (11) zum Aufbau einer Verbindung auf dem zweiten Kanal (B-Kanal) von der ISDN-Teilnehmerstelle (10) zu einem Zielteilnehmer (15) vorgesehen ist, und daß der Personalcomputer (11) zur Verbindung des Anrufs der Mobilstation (12) mit dem Zielteilnehmer (15) vorgesehen ist.
